# EUROPÄISCHE PATENTSCHRIFT

(11) **EP 0 444 170 B1**
(45) Veröffentlichungstag und Bekanntmachung des Hinweises auf die Patenterteilung: **12.06.1996**
(21) Anmeldenummer: 90912767.2
(22) Anmeldetag: 10.09.1990
(51) Int. Cl.: F24J 3/08, F03G 7/04

(54) **VERFAHREN ZUR ALLGEMEINEN ERDWÄRMENUTZUNG UND MINERALGEWINNUNG IN DER ZONE OF WEAKNESS (IN TIEFEN VON 13-30 KM)**
PROCESS FOR MAKING GENERAL USE OF THE EARTH'S HEAT AND OBTAINING MINERALS IN THE ZONE OF WEAKNESS (AT DEPTHS OF 13-30 KM)
PROCEDE POUR L'UTILISATION GENERALE DE LA CHALEUR TERRESTRE ET L'EXTRACTION DE MINERAUX DANS LA ZONE DITE DE FAIBLESSE (A DES PROFONDEURS DE 13 A 30 KM)

(30) Priorität: 11.09.1989 DE 3930232
(43) Veröffentlichungstag der Anmeldung: 04.09.1991
(73) Patentinhaber: COMPISA AG, CH-8702 Zollikon (CH)
(72) Erfinder: FOPPE, Werner, D-5130 Geilenkirchen (DE)
(74) Vertreter: Felber, Josef
(86) Internationale Anmeldenummer: CH9000212
(87) Internationale Veröffentlichungsnummer: WO9103690

(56) Entgegenhaltungen:
- DE-A- 2 944 731
- DE-A- 3 000 836
- DE-A- 3 627 680
- DE-A- 3 801 933

## Beschreibung

Bekannt ist das sogenannte Hot-Dry-Rock-Verfahren, wie es in den 60iger Jahren von Wissenschaftlern des Los Alamos LAB in New Mexico, U.S.A., entwickelt wurde, um grosse Aufheizflächen im heissen, trockenen, kristallinen Gestein zur Erdwärmegewinnung zu schaffen. Das Hot-Dry-Rock Verfahren beschreibt durch seine Bezeichnung das Vorhaben seiner Erfinder, in eben diesem heissen, trockenen Gestein, in dem keine natürlichen Zuflüsse von Oberflächenwasser oder sonstige Quellen vorhanden sind, künstliche Rissgebiete, die miteinander kommunizieren, zu schaffen, um möglichst Erdwärme an den Orten gewinnen zu können, wo Erdwärmeanomalien vorliegen, aber keine natürliche Heissdampfgewinnung möglich ist, wie in den klassischen Erdwärme-Nutzungsgebieten der Erde.

Das Hot-Dry-Rock Verfahren fusst auf dem Hydro-Frac Verfahren, das zum Beispiel in der Erdölindustrie bereits seit 30 Jahren eingesetzt wird, um versiegende Erdöl- oder Erdgasquellen wieder ergiebiger sprudeln zu lassen. Bei diesem Hot-Dry-Rock Verfahren wird der untere Teil des Bohrloches, in dessen Tiefe eine Aufspaltung des Gesteins stattfinden soll,

nach oben hin abgesperrt und unter hohen Wasserdruck gesetzt, um infolge eines Hydro-Frac-Effektes das umliegende Gestein aufzubrechen. Der Druck des Wassers muss die Scherkräfte des aufzuspaltenden Gesteins deutlich übersteigen, damit das Gestein reisst und sich lange Spalten mit grossen Aufheizvoluminas bilden.

Dieses Verfahren wurde in Fenton Hill bei Los Alamos, U.S.A., erfolgreich bis 3000 m Tiefe getestet. Ein weiterer Versuch in etwa 4000 m Tiefe schlug nach anfänglichem Erfolg fehl, da die Druckeinrichtung im unteren Teilabschnitt des Bohrlochs unter dem aufzubringenden hohen Wasserdruck versagte. Weil die Scherkräfte des Gesteins mit zunehmendem Ueberlagerungsdruck wachsen, erfährt das Hot-Dry-Rock Verfahren seine Begrenzung in Tiefen, wo die Scherkräfte des Gesteins hoher liegen als die technisch erzeugbaren Drucke in dem durch sogenannte "packer" abgesperrten Bohrlochteil. Wie Messungen aus Tiefstbohrungen und seismische Untersuchungen zeigen, gibt es starke Abweichungen von der im allgemeinen linearen Zunahme der Scherkräfte des Gesteins bei zunehmendem Ueberlagerungsdruck. In gewissen Schichten steigen die Scherkräfte überproportional stark an. So können sie in 3000 Meter Tiefe zeitweilig bereits bis zu 2000 bar ansteigen. Solche unstetige Anstiege der Scherkräfte begrenzen zusätzlich den Anwendungsbereich des Hot-Dry-Rock Verfahrens. Neueste geologische Erkenntnisse, seismische Untersuchungen und die Ergebnisse der sogenannten Kola-Tiefbohrung auf der sowjetischen Kola-Halbinsel, wo in einer Bohrzeit von 17 Jahren bis auf eine Tiefe 13'600 Metern vorgestossen wurde, beweisen, dass die Scherkräfte des Gesteins der Kontinental-Kruste, von zeitweiligem scharfen Anstieg in bestimmten Gesteinsschichten abgesehen, in der Regel bis 13 km Tiefe linear mit dem Ueberlagerungsdruck zunehmen, um dann plötzlich bis auf eine Tiefe von etwa 30 km im Verhältnis zum Ueberlagerungsdruck stark abzufallen. Erklärt wird dieses Verhalten des kristallinen Gesteins durch den Kristallwasseraustritt bei den in dieser Tiefe herrschenden Temperatur- und Druckbedingungen, wodurch ein natürlicher Micro-Frac Mechanismus einsetzt, der das vordem kompakte Gestein feinrissig aufspaltet und damit die Scherkräfte sprunghaft absinken lässt.

Dieser feinrissig aufgespaltete Bereich der kontinentalen Erdkruste mit verminderten Scherkräften, in Fachkreisen als ZONE OF WEAKNESS bezeichnet, weist bereits im oberen Bereich Temperaturen um 500 °C auf. Die Temperaturen dürften bis auf eine Tiefe von etwa 30 km auf Werte in der Gössenordnung von über 1'000 °C ansteigen.

In der DE-A-3 801 933 wird Verfahren zur Aufnahme von Erdwärme durch strömendes Wasser offenbart. Dabei ist an eine Tiefe von 1500 bis maximal 2500 Meter gedacht. Dieses HOT-DRY-ROCK-Verfahren beinhaltet grundsätzlich einen Wasserkreislauf, in welchem Gesteinsschichten in einer gewissen Tiefe in einem Wärmeaustausch mit dem Kreislaufwasser stehen.

Hierzu wird ein Fallrohr für eine Tiefe von bis zu maximal 2'500 m eingesetzt. Es wird mit einem maximalen Bohrlochdurchmesser von bloss 37,5 cm gearbeitet. Die verfahrenstechnischen Anforderungen und Charakteristika sind daher kaum mit dem vorliegenden Verfahren vergleichbar, für dessen Betreiben auf Tiefen von 13 km und mehr vorgestossen werden muss.

Die DE-A 30 00 836 gibt ein Verfahren zum Herstellen eines Bruchstellen-Komplexes in einer Formation an. Es beschäftigt sich mit dem Erschliessen und Erzeugen von Bruchstellen im heissen trockenen Gestein zur Verbesserung des bekannten HOT-DRY-ROCK-Verfahrens. Im bekannten HOT-DRY-ROCK-Verfahren wird das Aufreissen der Gesteinsformationen nur in relativ kleinen Bohrlochbereichen bewerkstelligt. Hierzu werden weit unten im Bohrloch "Packer" installiert, durch welche dann mittels Druckleitungen Wasser in den Bereich unterhalb des Packers oder in Bereiche zwischen zwei Packern gepumpt wird. In der DE-OS 30 00 836 wird dargelegt, dass die Druckwellen nur in Packungs- bzw. Dichtungszonen wirken. Das Bohrloch ist dort aber vorteilhaft nicht verrohrt. Weil beim HOT-DRY-ROCK-Verfahrens in Tiefen bis etwa 4'000 m vorgestossen wird, stösst man dabei auf Bereiche, in denen die Scherkräfte auf bis zu 2'000 bar ansteigen. Diese Drucke sind dort wegen technischer Begrenzungen nicht aufzubringen. Bei 4'000 m Tiefe beträgt der hydrostatische Druck ja bloss 400 bar. Wenn die Scherkräfte in dieser Tiefe 2'000 bar ausmachen, so müssten ja ca. 1'600 bar technisch erzeugt werden, was nicht möglich ist, jedenfalls nicht mit entsprechend grossen benötigten Wassermengen. Nun steigen die Scherkräfte bis auf ca. 13 km sogar noch weiter an und gleichzeitig steigen die Bohrkosten mit jedem zusätzlichen Bohrmeter exponentiell an. Schon ins heisse trockene Gestein bis in Tiefen von 3'000-4'000 m vorzustossen, ist mit hohen Kosten und Schwierigkeiten verbunden, wie aus der DE-A 30 00 836 hervorgeht. Es mag daher überraschen, dass für das vorliegende erfindungsgemässe Verfahren in noch grössere Tiefen vorgestossen werden soll, weil ja die Scherkräfte über einige km immer noch weiter zunehmen.

Aufgabe dieser Erfindung ist es angesichts der Erkenntnisse über die ZONE OF WEAKNESS, ein Verfahren zur Nutzung der Erdwärme in hoher Qualität (überhitztes Wasser um 500 °C) und benötigter Quantität sowie zur Gewinnung von allfällig vorhandenen Mineralien in dieser ZONE OF WEAKNESS zu schaffen, das an jedem Ort der Erde zu geringen Kosten betreibbar ist.

Gelöst wird diese Aufgabe mit einem Verfahren zur allgemeinen Erdwärmenutzung und Gewinnung von Mineralien in der ZONE OF WEAKNESS, das sich dadurch auszeichnet, dass in dieser Tiefenzone von 13 bis 30 Km der kontinentalen Lithosphäre, in welcher die Scherkräfte des Gesteins im Vergleich zum Ueberlagerungsdruck plötzlich stark abnehmen, unter Ausnutzung des hydrostatischen Druckes einer Wassersäule in einem bis in diese Tiefen reichenden, mittels Schmelzbohren erzeugten, wenigstens einen Meter im Durchmesser messenden und bis auf den in die ZONE OF WEAKNESS reichenden Bohrlochteil druckfest verrohrten Bohrloch unter Hinzufügung des allfällig noch fehlenden Restdruckes durch Einpumpen von Druckwasser an der Oberfläche in dieses als Kaltwasserdruckschacht wirkende Bohrloch der erwünschte Hydro-Frac zur Aufspaltung einer ausreichend grossen Aufheizzone im heissen Gestein mit den verminderten Scherkräften erzielt wird, und dass das eingepumpte Wasser nach Wärmeaufnahme im aufgerissenen Gestein durch wenigstens ein weiteres, auf der Erdoberfläche im Abstand von etwa 100 Metern zu diesem Bohrloch ebenfalls mittels Schmelzbohren niedergebrachtes, als Förderschacht wirkendes Bohrloch von wenigstens einem Meter Durchmesser an die Erdoberfläche gefördert wird, wo dessen Wärme genutzt wird und in ihm enthaltene Mineralien gewonnen werden.

Damit wird auch das gegenwärtig technisch ungelöste Problem der Schaffung grosser Aufheizflächen in grossen Tiefen gelöst, indem nämlich durch Nutzung der Schmelzbohrtechnik gemäss der DE-C-25 54 101 C2 und der internationalen Anmeldung PCT/DE88/00013 diese ZONE OF WEAKNESS mit grossen Bohrlochdurchmessern erreicht wird. Die Bohrlöcher werden bis zu den letzten zwei Kilometern, die durch Hydro-Frac aufzuspalten sind, druckfest verrohrt und die Aufschliessung des schon durch geologische Prozesse vorgefracten heissen Gesteins in dieser ZONE OF WEAKNESS wird unter dem Druck der aufgebauten Kaltwassersäule möglich. Die Grösse der Bohrlochdurchmesser, die nur mittels der eingangs erwähnten Schmelzbohrtechniken zu erreichen sind, spielen eine wichtige Doppelfunktion:
1. Es besteht eine gesetzmässige Aabhängigkeit zwischen dem Bohrlochdurchmesser und der Länge der vom Bohrloch ausgehenden, durch Hydro-Frac im heissen Gestein induzierbaren Risse und damit auch zu der Grösse des zu erschliessenden geothermen Reservoirs. Nach heutigen Erkenntnissen erstreckt sich die induzierbare Rissausdehnung auf etwa das 600-fache des Bohrlochdurchmessers.
2. Der Bohrlochdurchmesser bildet ein Mass für die Durchflusskapazität und für die Fähigkeit des Bohrloches, eine Funktion als Tagesspeicher zu übernehmen, um wechselnde Bedarfspitzen problemlos abzufangen.

In Anlehnung an den Begriff "Hot-Dry-Rock-Verfahren" wird das vorliegende Verfahren entsprechend "Hot-Weak-Rock-Verfahren" genannt. Ein erstes, zum Beispiel mittels des Schmelzbohrverfahrens gemäss der DE-C-25 54 101 C2 und der internationalen Anmeldung PCT/DE88/00013 erstelltes Bohrloch wird als Kaltwasserschacht angelegt. Dieses Bohrloch reicht in eine Tiefe von zwischen etwa 13 bis 15 km, also in die sogenannte ZONE OF WEAKNESS und wird vorteilhaft mit einem Durchmesser von einem bis zwei Metern erstellt. Peripher um diesen zentralen Kaltwasserschacht verteilt werden weitere Bohrlöcher von etwa einem Meter Durchmesser als Förderschächte in einem Abstand von etwa 100 Metern vom zentralen Bohrloch erstellt. Diese Förderschächte werden auf dem Weg in die Tiefe vorteilhaft um jeweils etwa 1000 Meter seitlich vom zentralen Kaltwasserschacht weg abgelenkt, um in der Tiefe eine möglichst grosse Aufheizfläche zu erschliessen. Eine solche Ablenkung von 1000 m bei einer Tiefe von 15 km ist problemlos zu erreichen, denn schon bei der eingangs erwähnten Kola-Bohrung, die mit einer Rotary-Bohrtechnik erstellt wurde, welche nur begrenzte Möglichkeiten zur Steuerung zulässt, musste notgedrungen eine Abweichung von 840 m hingenommen werden, obwohl versucht wurde, die Abweichtung möglichst klein zu halten. Die Rissbildungslängen durch Hydrofrac, welche etwa das 600-fache des Bohrlochdurchmessers ausmachen, vermögen dann das Gebiet zwischen den Bohrlöchern hinreichend zu erschliessen. Alle Bohrlöcher werden mit Stahldruckrohren bis in etwa 13 km Tiefe, das heisst bis auf zwei Kilometer vor deren unterem Ende verrohrt. Ein solches Verrohren ist aus dem Stand der Bohrtechnik bekannt. Zumindest die obere Hälfte jener verrohrten Bohrlöcher, die als Förderschächte dienen, wird wärmeisoliert. Die unteren, unverschalt bleibenden 2 km Bohrschachtbereich dienen zur Erzeugung grosser Auheizflächen mittels Hydro-Frac im heissen Gestein. Oben an der Oberfläche werden die Förderschächte über eine Wärmeaustauscheranlage mit dem zentralen Kaltwasserdruckschacht verbunden. Die Wärmetauscheranlage ist so konstruiert, dass zuerst die Temperaturspitze für den Prozessdampfbedarf der Wirtschaft aus dem überhitzt anfallenden geothermen Wasser oberhalb der Temperatur von 300 °C genutzt wird, anschliessend der Bedarf zur Stromerzeugung, der nur einen geringen Teil ausmacht, da der Hauptbedarf an Energie direkt durch Wärmelieferung gedeckt wird, wie dies der grosse Bedarf an Heisswasser für Gewerbe, Landwirtschaft und Haushalte zeigt. Das Verfahren wird angefahren, indem vorerst alle Absperrventile zur Wärmetauscheranlage geschlossen werden und alle Schächte gleichzeitig über spezielle Zuleitungen mittels Druckpumpen mit Kaltwasser geflutet werden. Das in der Tiefe der ZONE OF WEAKNESS liegende Gestein weist Scherkräfte auf, die durch die Wirkung des in diesen Bereichen auftretenden natürlichen Micro-Frac's so stark gesunken sind, dass der hydrostatische Druck der im zentralen Bohrloch stehenden Kaltwassersäule nahezu ausreicht, um an der Bohrlochsohle den Hydro-Frac-Effekt auszulösen. Zur Aufspaltung des Gesteins und Schaffung von grossen Aufheizflächen wie auch zu deren Offenhaltung sind deshalb nur noch geringe Druckkräfte nötig. Ein Hydrofrac, welcher bei ca. 1500 bis 1700 bar einsetzt, kann mittels einer Kaltwassersäule von 15 km Höhe und Druckwasserpumpen von zum Beispiel 200 bar induziert werden. Der Frac-Effekt wird solange aufrechterhalten, bis ein ausreichend grosses Reservoir erschlossen ist und die Verbindung über Rissbildungen zwischen den einzelnen Schächten in der Tiefe untereinander hergestellt ist. Nach Erreichen dieses Zustandes werden, mit Ausnahme des zentralen Kaltwasserdruckschachtes, die Kaltwasserzuführungen geschlossen und die Ventile zur Wärmetauscheranlage geöffnet. Unter dem Druck der fortgesetzten Kaltwasserzufuhr im Zentralschacht drückt das aufsteigende und überhitzte geotherme Wasser in den Förderschächten das aus der Hydro-Frac Phase noch überlagernde kühlere Wasser durch die Wärmetauscheranlage zu den Förderpumpen des Zentralschachtes, womit die Energieausbeute beginnt, bis nach Verdrängen des Kaltwassers im Förderschacht das angestrebte Energienieveau allmählich erreicht wird, ohne dass das überhitzte Geothermwasser zwischenzeitlich in die Dampfphase übergehen konnte, bei der es zu Ablagerungen im Förderschacht kommen würde. Auch im überhitzten Zustand des geothermen Wassers wird durch geeignete elektrische Polungen am Kreislauf dafür gesorgt, dass es nicht zu Ionenabscheidungen kommt, es sei denn in Aggregaten, die dafür vorgesehen sind, wertvolle Gase oder Mineralien, wie zum Beispiel Edelmetalle, dem geothermen Fluid zu entziehen. In stark mit Mineralien angereicherten geothermen Fluiden kann die Energiegewinnung zur Nebensache und die Mineralgewinnung zur Hauptsache werden, sodass Energie- und Erzgewinnung zu Produktionszweigen in einem einzigen Anlagenkomplex werden.

Die erfindungsgemässe Methode, die durch die Ausnutzung der hydrostatischen Wassersäule im Bohrloch gekennzeichnet ist, kann auch den Wirkungsradius des bekannten Hot-Dry-Rock-Verfahrens um die dadurch gewonnenen Druckkräfte erweitern, wenn eine entsprechende Bohrloch-Stahlverrohrung vorgenommen wird. Das neue Verfahren bietet die Möglichkeit, mit einem geschlossenen geothermen Kreislauf zu arbeiten, damit keine Schadstoffe in die Atmosphäre oder Biospähre gelangen, indem der oder die Heisswasserschächte durch Zwischenschaltung eines Wäremtauschers mit dem Kaltwasserschacht über eine geschlossene Druckleitung verbunden werden. Damit wird das geotherme Wasser nach Wärmeentzug dem Kaltwasserdruckschacht direkt wieder zugeführt und zusammen mit der zu ergänzenden Schwundwassermenge unter mässigem Zusatzdruck eingepumpt, der zur Offenhaltung beziehungsweise Neuentstehung von Rissen durch Hydro-Frac im einmal erschlossenen Reservoir nötig ist. Dieser ökologische Aspekt ist entscheidend für die Akzpetanz der Erdwärmenutzung, indem an der Oberfläche keine Schadstoffe anfallen und die Ablagerung der angereicherten, gelösten Substanzen wie bei natürlichen geologischen Vorgängen in den ausgekühlten oberen Rissbereichen des Reservoirs erfolgt. Ein weiterer wichtiger Ökologischer Aspekt ist die Anordnung des Sekundärenergiekreislaufs ohne Kühlturm, um eine weitere Aufheizung der Atmosphäre durch Abwärme zu vermeiden. Dies wird möglich durch eine Energiekoppelung mit adequaten Verbrauchern, die mit der Geothermanlage verbunden sind und damit auch die Wärme der grossen Mengen Niedertemperatur-Wasser abbauen, die gegenwärtig besonders bei grossen konventionellen und Kernkraftwerken einfach in die Atmosphäre abgegeben wird. Die aus dem Rücklauf der Fernheizsysteme verbleibenden Restmengen an Wärme werden in Greenhouse- und Aquaproduktionsanlagen genutzt, welche die Bevölkerung im Umfeld der Geothermanlage mit ihren Produkten beliefern. Das Erdwärmereservoir ist ausserdem so flexibel, insbesondere wenn um den Kaltwasserdruckschacht in entsprechenden Abständen mehrere periphere geotherme Förderschächte angelegt sind, dass es das überhitzte Wasser vorübergehend auch speichern kann. Die mit überhitztem Geothermwasser gefüllten Förderschächte können so als Kurzspeicher zum Ausgleich von Tagesverbrauchspitzen dienen oder die Gesamtanlage kann als Langzeitspeicher genützt werden, wodurch stark schwankender jahreszeitlicher Verbrauch ohne Zusatzanlage abgedeckbar ist.

Die Vorteile des Hot-Weak-Rock Verfahrens sind vielfältig und im folgenden zusammengestellt:
1. Die Erdwärme ist nach dem Hot-Weak-Rock Verfahren an jedem Punkt der Erde nutzbar und nicht wie beim Hot-Dry-Rock Verfahren nur an ausgewählten Orten mit für ein solches Verfahren vorteilhaften Wärmeanomalien.
2. Mit dem Hot-Weak-Rock-Verfahren kann hochwertige Energie in Prozessdampfqualität in einer Quantitätsmenge pro Quadratmeter Kraftwerkseinheit gewonnen werden, wie das bislang unterreicht blieb.
3. Durch die Verrohrung des Bohrloches beziehungsweise der Bohrlöcher und durch die vorhandenen, extrem festen Ueberlagerungsschichten ist die Möglichkeit des erschlossenen Reservoirs, zur Oberfläche hin durchzubrechen, minimiert.
4. Die Energieausbeute eines derartig erschlossenen Geotherm-Reservoirs nimmt mit zunehmender Betriebsdauer stetig zu, sowohl in der Qualität als auch in der Quantität. Bedingt wird diese phantastische Erscheinung erstens durch das Verhalten von überhitztem Wasser, nach dem Viskositätsgesetz immer zu den heissesten Punkten zu fliessen, sodass das einmal erschlossene Erdwärmereservoir sich selbsttätig in immer tiefere, heissere Zonen erweitert, und zweitens durch den ständig stattfindenden Energieaufschluss infolge von Thermostress, der bei Auskühlung des durch Hydro-Frac einmal erschlossenen Erdwärmereservoirs in dessen Gestein einsetzt.

## Patentansprüche

1. Verfahren zur allgemeinen Erdwärmenutzung und Gewinnung von Mineralien in der ZONE OF WEAKNESS, das heisst in der Tiefenzone von 13 bis 30 km der kontinentalen Lithosphäre, in welcher die Scherkräfte des Gesteins im Vergleich zum Ueberlagerungsdruck plötzlich stark abnehmen, dadurch gekennzeichnet, dass unter Ausnutzung des hydrostatischen Druckes einer Wassersäule in einem bis in diese Tiefen reichenden, mittels Schmelzbohren erzeugten, wenigstens einen Meter im Durchmesser messenden und bis auf den in die ZONE OF WEAKNESS reichenden Bohrlochteil druckfest verrohrten Bohrloch unter Hinzufügung des allfällig noch fehlenden Restdruckes durch Einpumpen von Druckwasser an der Oberfläche in dieses als Kaltwasserdruckschacht wirkende Bohrloch der erwünschte Hydro-Frac zur Aufspaltung einer ausreichend grossen Aufheizzone im heissen Gestein mit den verminderten Scherkräften erzielt wird, und dass das eingepumpte Wasser nach Wärmeaufnahme im aufgerissenen Gestein durch wenigstens ein weiteres, auf der Erdoberfläche im Abstand von etwa 100 Metern zu diesem Bohrloch ebenfalls mittels Schmelzbohren niedergebrachtes, als Förderschacht wirkendes Bohrloch von wenigstens einem Meter Durchmesser an die Erdoberfläche gefördert wird, wo dessen Wärme genutzt wird und in ihm enthaltene Mineralien gewonnen werden.

2. Verfahren nach Anspruch 1, dadurch gekennzeichnet, dass der oder die Förderschächte am oberen Ende druckfest mit dem Kaltwasserdruckschacht verbunden sind, derart, dass ein geschlossener geothermischer Wasserkreislauf gegeben ist, in dem das geotherme Wasser nach Energieentzug mittels Wärmetauscher dem Reservoir wieder zugeführt wird, ohne mit der Biosphäre in Kontakt zu kommen.

3. Verfahren nach Anspruch 2, dadurch gekennzeichnet, dass mittels elektrischen Polungen, die am Geotherm-Wasserkreislauf angebracht werden, Ablagerungen von Mineralien vermieden wird.

4. Verfahren nach Anspruch 2, dadurch gekennzeichnet, dass mittels elektrischen Polungen, die am Geotherm-Wasserkreislauf angebracht werden, Mineralablagerungen für die Mineralgewinnung erzeugt werden.

5. Verfahren nach einem der vorhergehenden Ansprüche, dadurch gekennzeichnet, dass das einmal aufgespaltene Erdwärmereservoir durch Einsatz einer Druckförderpumpe mit im Vergleich zur gewonnen Energie geringem Energieaufwand offengehalten wird.

6. Verfahren nach einem der vorhergehenden Ansprüche, dass unter Ausnutzung des beim fortlaufenden Energieentzug stattfindenden Thermostress' im Gestein des Reservoirs und unter Ausnutzung des Verhaltens von überhitztem Wasser, entsprechend dem Viskositätsgesetz immer zu den heissesten Punkten des Reservoirs zu fliessen, das einmal erschlossene Erdwärmereservoir selbstätig in immer tiefere, heissere Zonen erweitert wird, wodurch sowohl die Qualtität als auch die Quantität der zu gewinnenden Energie mit zunehmender Betriebsdauer erhöht wird.

7. Verfahren nach einem der vorhergehenden Ansprüche, dadurch gekennzeichnet, dass in einem etwa konstanten Abstand zu dem als Kaltwasserdruckschacht wirkenden, für das Einpumpen des Wassers bestimmten Bohrlochs mehrere peripher angeordnete Bohrlöcher als Förderschächte zum Hochfördern des erhitzen Wassers genutzt werden, derart, dass das eingepumpte Wasser sich von der Sohle des zentralen Kaltwasserdruckschachtes allseitig radial in den durch Hydro-Frac-Effekt entstandenen Rissen unter Wärmeaufnahme ausbreitet, in das Innere der peripher angeordneten Förderschächte gelangt und darin unter dem herrschenden Druck aufsteigt.

8. Verfahren nach mindenstens einem der vorhergehenden Ansprüche 2 bis 4, dadurch gekennzeichnet, dass das mittels der Wärmetauscher gewonnene, unter hohem Druck stehende Heisswasser über Expansionsturbinen entspannt wird, die elektrische Generatoren antreiben, oder dass es in ein Fernwärme-Leitungssystem eingespiesen wird.

9. Verfahren nach einem der vorhergehenden Ansprüche, dadurch gekennzeichnet, dass es durch gleichzeitiges Fluten aller Bohrlöcher mit anschliessendem Druck der Kaltwassersäulen in den Bohrschächten in Kombination mit der Hydro-Frac-Phase angefahren wird, derart, dass das Auftreten einer Dampfphase mit Auskristallisierung von Fluidteilen verhindert wird und ein phasenloser Uebergang zu überhitztem Geothermwasser erreicht wird.

10. Verfahren nach einem der vorhergehenden Ansprüche, dadurch gekennzeichnet, dass die mit überhitztem Geothermwasser gefüllten Förderschächte als Kurzspeicher zum Ausgleich von Tagesverbrauchspitzen dienen oder dass die Gesamtanlage als Lanzeitspeicher genützt wird, wodurch stark schwankender jahreszeitlicher Verbrauch ohne Zusatzanlage abgedeckbar ist.

## Claims

1. Process for the recovery of geothermal energy in the ZONE OF WEAKNESS, that is in a deep zone of the continental lithosphere lying between a depth of 13 and 30 kilometers and in which the shear strength of the hot rock suddenly decreases in relation to the overburden, characterized in that by using the hydrostatic pressure of a water column in a lined boring reaching down to these depths which has been made by a melting rock drilling, in which a pressure tube of at least 1 meter reaches down to the ZONE OF WEAKNESS, by supplying - if there is a missing amount of pressure - an additional pressure by pumping of pressurized water on the surface into the boring which acts as a cold water pressure shaft, in order to produce the required hydraulic fracturing effect to create a sufficiently large fractured heating zone within the hot rock with reduced shearing forces, and that the pumped water after extracting heat in the fractured rock through at least one additional boring, brought down by melting rock drilling in a distance of about 100 meters from this boring on the surface of the earth, which acts as recovery shaft boring with at lesat 1 meter diameter, is recovered to the earth's surface, where its heat and the contained minerals are recovered.

2. Process according to claim 1, characterized in that the recovery shaft or the several recovery shafts are pressure sealed connected to the upper supply end of the cold water pressure shaft, thereby forming a closed-loop, recirculating the geothermal water heating system in which the water is returned to the reservoir after passing through a heat exchanger, without contact with the biosphere.

3. Process according to claim 2, characterized in that by means of eletrical precipitators located in the recirculating geothermal water heating system, an accumulation of mineral deposits is prevented.

4. Process according to claim 2, characterized in that by means of electrical precipitators located in the recirculating geothermal water heating system, mineral deposits for recovering said mineral resources are effectuated.

5. Process according to one of the aforementioned claims, characterized in that the developed geothermal heat reservoir is maintained by a pressure pump having an energy consumption that is less than the recovered thermal energy.

6. Process according to one of the aforementioned claims, characterized in that the developed geothermal heat reservoir continually expands into a deeper, hotter zone using a constant energy release resulting from the thermal stress in the reservoir rock formation and superheated water flowing toward the hottest point according to the law of viscosity, thus increasing the quanitiy and quality of energy recovered with increasing operation time.

7. Process according to one of the aforementioned claims, wherein a plurality of borings acting as return shafts for the hot water are arranged in an approximately constant radius about the periphery of the lined boring acting as the cold water pressure shaft, wherey the supplied water gathers heat while flowing radially from the bottom of the central, cold water pressure shaft through the cracks produced by said hydraulic fracturing effect, thus reaching and finally flowing back up through the return sharts under the resulting pressure.

8. Process according to one of the aforementioned claims 2 to 4, characterized in that the highly pressurized supplied water, heated through heat exchangers, drives an expansion turbine coupled to an electric generator or supplies steam for a remote heating system.

9. Process according to one of the aforementioned, characterized in that the process is started by a simultaneous flooding of all borings followed by pressurization of the cold water shaft, combined with a hydraulic fracturing stage, to prevent a formation of a vapor phase with the suspended liquid phase, and to effectuate a single phase transition of said geothermally superheated water.

10. Process according to one of the aforementioned claims, characterized in that the shafts filled with said geothermally superheated water serve as a short-term storage and buffer area, to compensate for daily peaks in energy demand, and wherein an entire facility is used as a long-term buffer, to cover large seasonal variations in energy demand without additional facilities.

## Revendications

1. Procédé d'utilisation générale de la géothermie et d'extraction de minéraux dans la ZONE OF WEAKNESS, c'est-à-dire dans la zone s'étendant à une profondeur de 13 à 30 km dans la lithosphère continentale, dans laquelle les forces de cisaillement de la roche diminuent soudain fortement par comparaison avec la pression de superposition, caractérisé en ce qu'avec l'exploitation de la pression hydrostatique d'une colonne d'eau dans un trou de forage atteignant ces profondeurs, réalisé au moyen d'une forage thermique, mesurant au moins un mètre de diamètre et tubé de manière résistant à la pression jusqu'à la partie du trou de forage pénétrant dans la ZONE OF WEAKNESS et avec l'adjonction de la pression résiduelle éventuellement encore manquante, par pompage d'eau sous pression à la surface dans ce trou de forage agissant comme un puits d'eau froide sous pression, il est obtenu la fracturation hydraulique désirée, destinée à créer, avec les forces de cisaillement diminuées, la fissuration d'une zone de chauffage suffisamment grande dans la roche chaude, et que l'eau injectée par pompage est refoulée, après absorption de chaleur dans la roche ouverte par fissuration, par au moins un autre trou de forage d'au moins un mètre de diamètre, foré à la surface de la terre à une distance d'environ 100 mètres de ce trou de forage également par forage thermique et agissant comme un puits d'extraction, l'eau étant refoulée à la surface de la terre, où sa chaleur est utilisée et où les minéraux qu'elle contient sont extraits.

2. Procédé suivant la revendication 1, caractérisé en ce qu'à l'extrémité supérieure, le ou les puits d'extraction sont reliés d'une manière résistant à la pression au puits d'eau froide sous pression, de sorte qu'il est constitué un circuit d'eau fermé et géothermique, dans lequel l'eau géothermique est ramenée, après prélèvement d'énergie, au réservoir au moyen d'échangeurs de chaleur, sans entrer en contact avec la biosphère.

3. Procédé suivant la revendication 2, caractérisé en ce que, au moyen de dispositifs de polarisation électriques, disposés sur le circuit géothermique d'eau, des dépôts de minéraux sont évités.

4. Procédé suivant la revendication 2, caractérisé en ce que, au moyen de polarités électriques, disposés sur le circuit géothermique d'eau, il est produit des dépôts de minéraux destinés à l'extraction.

5. Procédé suivant une des revendications précédentes, caractérisé en ce que le réservoir géothermique une fois fracturé est maintenu ouvert par la mise en oeuvre d'une pompe de transfert, avec une dépense en énergie faible par comparaison avec celle obtenue.

6. Procédé suivant une des revendications précédentes, caractérisé en ce qu'avec l'exploitation du "stress" thermique réalisé dans la roche du réservoir pendant le prélèvement continu d'énergie et avec l'exploitation du comportement de l'eau surchauffée, consistant, suivant la loi de la viscosité, à s'écouler toujours vers les points les plus chauds du réservoir, le réservoir géothermique une fois mis en exploitation s'étend de lui-même dans des zones toujours plus profondes et plus chaudes, de sorte que la qualité aussi bien que la quantité de l'énergie à obtenir augmentent au fur et à mesure que la durée de l'exploitation augmente.

7. Procédé suivant une des revendications précédentes, caractérisé en ce qu'à une distance approximativement constante par rapport au trou de forage agissant comme un puits d'eau froide sous pression et destiné à l'injection de l'eau par pompage, plusieurs trous de forage répartis périphériquement sont utilisés comme puits d'extraction pour refouler vers le haut l'eau échauffée, de telle sorte que l'eau injectée par pompage s'étend radialement de tous les côtés, en absorbant de la chaleur, à partir de la semelle du puits central d'eau froide sous pression, dans les fissures créées par fracturation hydraulique, cette eau injectée pénétrant à l'intérieur des puits d'extraction disposés à la périphérie et montant dans ceux-ci sous l'action de la pression régnante.

8. Procédé suivant au moins une des revendications 2 à 4, caractérisé en ce que l'eau chaude obtenue au moyen des échangeurs de chaleurs et se trouvant à haute pression se détend sur des turbines d'expansion, qui entraînent des générateurs électriques, ou que cette eau est injectée dans une canalisation de chauffage à distance.

9. Procédé suivant une des revendications précédentes, caractérisé en ce qu'il est démarré par un envoi d'eau simultanément dans tous les trous de forage, suivi de la pression des colonnes d'eau froide sans les puits de forage en combinaison avec la phase de fracturation hydraulique, de sorte que l'apparition d'une phase gazeuse avec cristallisation de parties du fluide est empêchée et qu'une transition sans phase est obtenue vers l'eau géothermique surchauffée.

10. Procédé suivant une des revendications précédentes, caractérisé en ce que les puits d'extraction remplis d'eau géothermique surchauffée sont utilisés comme accumulateurs courts pour compenser les pointes de consommation quotidiennes ou que l'ensemble de l'installation est utilisé comme accumulateur de longue durée, de sorte que des fortes variations saisonnières d'utilisation peuvent être couvertes sans installation supplémentaire.
